# FASCICULE DE BREVET EUROPEEN

(11) **EP 1 323 277 B1**
(45) Date de publication et mention de la délivrance du brevet: **10.05.2006**
(21) Numéro de dépôt: 01976350.7
(22) Date de dépôt: 02.10.2001
(51) Int. Cl.: H04L 29/06, G06F 17/30, G06F 9/46

(54) **UNITE DE MULTIPLEXAGE, SYSTEME ET PROCEDE DE COMMUNICATION DANS UN RESEAU INFORMATIQUE**
MULTIPLEXINGEINHEIT, SYSTEM UND VERFAHREN FÜR DIE KOMMUNIKATION ÜBER EIN RECHNER-NETZWERK
MULTIPLEXING UNIT, SYSTEM AND METHOD FOR COMMUNICATION IN A COMPUTER NETWORK

(30) Priorité: 02.10.2000 FR 0012629
(43) Date de publication de la demande: 02.07.2003
(73) Titulaire: Amadeus S.A.S., 06410 Biot (FR)
(72) Inventeur: DOR, Pierre, 06000 Nice (FR); GRANDEMANGE, Alexis, 06000 Nice (FR); LEXTRAIT, Vincent, 06000 Nice (FR); MARQUION, Véronique, 06000 Nice (FR); WEISSERT, François, 06000 Nice (FR)
(74) Mandataire: Hautier, Jean-Louis
(86) Numéro de dépôt international: PCT/FR2001/003041
(87) Numéro de publication internationale: WO 2002/030085

(56) Documents cités:
- EP-A- 0 969 367
- WO-A-00/28433
- WO-A-00/46683
- WO-A-99/44155
- US-A- 5 799 173
- US-A- 5 951 694
- CHICAGO-SOFT ET AL: "DLLAGATOR VERSION 2.0 GENERAL AVAILABILITY" INTERNET CITATION, 6 avril 1998 (1998-04-06), XP002146207
- SCHIEMANN B ET AL: "A new approach for load balancing in high-performance decision support systems" FUTURE GENERATIONS COMPUTER SYSTEMS,NL,ELSEVIER SCIENCE PUBLISHERS. AMSTERDAM, vol. 12, no. 5, 1 avril 1997 (1997-04-01), pages 345-355, XP004056963 ISSN: 0167-739X

## Description

La présente invention concerne une unité de multiplexage pour la communication dans un réseau informatique entre une pluralité de machines clients supportant des programmes clients et un ou plusieurs serveurs supportant des programmes d'application, les programmes clients et d'application pouvant être incompatibles.

Elle a également trait à un système de communication intégrant une ou plusieurs de telles unités, ainsi qu'à un procédé qu'il pourra mettre en oeuvre.

L'invention trouvera notamment son application dans le domaine de la réservation de voyages ou de transports par des systèmes informatiques.

De tels systèmes, communément dénommés CRS (computerized reservation systems) utilisent des communications par des réseaux informatiques pour mettre en relation des clients (tels des agents dans le secteur du voyage ou des particuliers) et les services centraux des entreprises concernées par les réservations.

Ces systèmes sont amenés à mettre en jeu des composants très divers tels que des serveurs, des terminaux d'ordinateurs, des postes informatiques individuels, et ce par des liaisons variées et souvent composites constituées de réseaux locaux ou mondiaux.

Cette hétérogénéité se retrouve en outre au niveau des formats des données et des protocoles de communication. Si certains protocoles comme la combinaison HTTP/HTML sont suffisamment standardisés pour limiter les problèmes d'interopérabilité, d'autres comme IIOP ou JRMP nécessitent que les parties s'accordent sur des interfaces communes même si la manière de le représenter sur un réseau est standardisée.

Il existe donc un besoin important de rationaliser le mode de fonctionnement et de communication dans les systèmes informatiques tels que décrits précédemment.

A ce sujet, des dispositifs de multiplexage sont actuellement proposés selon plusieurs variantes. Ils assurent globalement une centralisation des connections et une réduction du nombre de connections nécessaires à l'acheminement des données.

Ils ne donnent cependant pas entière satisfaction. Ainsi, ils présentent des problèmes de temps de réponse ou, lorsqu'ils sont implantés à proximité d'un groupe de machines, ils sont lourds à gérer.

Par ailleurs, il est difficile d'administrer un grand nombre de clients : il faut que les serveurs supportent plusieurs versions des applications pour répondre aux requêtes de clients dont les logiciels sont à des niveaux de mise à jour différents.

Un autre inconvénient des systèmes actuels est que leur emploi n'est pas souple, notamment en terme de répartition de charge entre les serveurs, de gestion des pannes et d'éventuelles congestions.

Des solutions aux problèmes évoqués ont été proposées tel l'emploi d'intergiciels.

II s'agit de logiciels assurant une fonction d'intermédiaire entre une partie client et une partie serveur du système.

Leur emploi implique cependant de lourdes adaptations des applications. Ils pèsent donc sur les coûts et les délais de développement. Cet inconvénient est d'autant plus important que l'intergiciel doit être également déployé, ce qui accroît les risques de non interopérabilité et complique les tâches d'administration.

Sur le plan de la compatibilité des applications mises en jeu dans les systèmes informatiques, les moyens de multiplexage et les intergiciels actuellement connus n'offrent aucune solution spécifique.

On connaît pourtant du document WO-A-99.44155 un dispositif pour la conversion de données et la répartition de charge dans un réseau informatique. Selon ce document, on procède systématiquement à une conversion des données en un format fixe afin de faciliter leur traitement. Un système d'affectation de serveur à certains clients et une gestion de leur étranglement est aussi présenté.

Ce système est statique et ne permet pas de choisir le serveur en fonction du contenu des messages clients.

Ce dispositif est nettement orienté vers l'usage d'un protocole unique qui est l'EDIFACT. Il ne cherche pas à assurer une complète compatibilité, quelque soit les formats et protocoles employés par un serveur donné.

Par ailleurs, la répartition de charge proposée se limite à des circonstances ponctuelles et ne cherche pas à administrer globalement l'activité des serveurs. En outre ce système n'est pas modulaire ce qui gêne son évolutivité et le chemin suivi par les messages comporte de nombreuses étapes qui influent défavorablement sur le temps de réponse du réseau.

Le mécanisme est réalisé dans le code des clients et des serveurs qui doivent donc être modifiés pour le mettre en oeuvre.

Le document WO-A-00 28433 présente une interface de multiplexage entre des clients et des serveurs dans un réseau de communication du type Internet. L'unité d'interfaçage proposée est connectée à une pluralité de clients d'une part et une pluralité de serveurs d'autre part. L'interface ouvre et maintient les connexions avec les serveurs et assure la mise en relation avec les clients. Ce document divulgue une centralisation complète de la communication vers un système indifférenciant les types de clients et les types de serveurs. Ce système assure uniquement un routage dynamique dépendant des données des messages échangés.

Le document US-A-5 951 694 montre un réseau de services en ligne impliquant la mise en relation de différentes machines client et de différents serveurs par le biais d'un réseau de large extension et de portails de communication. Ce système est spécifiquement lié à la mise en oeuvre et au fonctionnement des portails considérés pour une mise en relation simultanée des clients avec les serveurs. La gestion du routage est donc spécifiquement dynamique.

Le document US-A-5 799 173 présente un procédé pour contrôler dynamiquement le fonctionnement d'une pluralité de serveurs en réponse à des requêtes. Ce document s'applique essentiellement à l'optimisation de l'exécution des requêtes au niveau des serveurs plutôt qu'à la formation d'un ensemble homogène de conversion et de routage. Cette antériorité montre essentiellement une possibilité de répartition de charge par la création de files au niveau des serveurs.

La publication DLLaGator Version 2.3General Availability est relative à un produit informatique sans rapport avec le domaine de communication dans un réseau informatique entre une pluralité de machines clients supportant des programmes clients et plusieurs serveurs supportant des programmes d'application.

On connaît également du document EP-A-0 969 367, un système de distribution de tâches entre des sous-systèmes d'un système informatique. Ce document est spécifiquement centré sur un mode particulier de réalisation de la répartition de charge dans le système informatique. Il ne présente pas une unité de multiplexage générale avec le dispositif particulier pour la conversion et le routage de toute requête dans le réseau informatique.

On connaît également de la publication de Messieurs SCHIEMANN ET BORMAN intitulée « A new approach for load balancing in high-performance decision support systems » un dispositif particulier pour assurer la répartition de charge dans un système informatique avec des moyens spécifiques pour la gestion en parallèle d'une pluralité de tâches.

On connaît enfin du document WO-A-00 46683 un appareil et une méthode pour la conversion de données dans un réseau informatique dans lequel les données de différents types sont systématiquement converties vers un format unique. Les données sont par ailleurs routées entre différents serveurs et clients par l'intermédiaire de moyens de routage classiques et non modulaires.

L'invention ici proposée a pour but de pallier les inconvénients des techniques jusqu'alors connues.

L'un de ses premiers objectifs est d'assurer une conversion efficace des messages pour les rendre compatibles avec n'importe quelle application cible. L'invention permet donc une communication entre toutes les composantes du réseau.

Elle permet dans le même temps d'organiser le multiplexage des données en mettant en oeuvre des modules de gestion d'entrée et de sortie qui sont facilement contrôlés par un organe d'administration : par exemple, l'intégration d'un nouveau type de client dans le système s'effectuera rapidement par la création d'un nouveau module de gestion d'entrée. Quant aux clients utilisant le même protocole et utilisé dans les mêmes conditions, ils pourront partager un même module de gestion d'entrée. On voit bien que l'invention ici exposée offre modularité et capacité d'adaptation à l'évolution structurelle ou fonctionnelle du réseau.

Elle assure aussi une gestion optimisée de l'étranglement des serveurs par une répartition de charge selon des critères déterminés tels la nature de la requête, l'encombrement, les pannes éventuelles.

Cet ensemble est en outre administrable de façon centralisée.

D'autres buts et avantages de l'invention apparaîtront au cours de la description qui suit et qui présente un mode préféré mais non limitatif de réalisation.

La présente invention concerne une unité de multiplexage pour la communication dans un réseau informatique entre une pluralité de machines clients supportant des programmes clients et un ou plusieurs serveurs supportant des programmes d'application, les programmes clients et d'application pouvant être incompatibles, comme revendiquée dans la revendication 1.

Cette unité pourra se présenter sous les variantes suivantes :
- les moyens de routage comportent des moyens de répartition de charge aptes à définir l'identité d'un serveur cible pour le traitement d'une requête, selon des conditions de charge.
- les moyens de routage comportent au moins un module d'application de routage connectable au reste des moyens de routage et apte à effectuer des fonctions de routage selon des règles prédéterminées.
- les moyens de conversion comportent au moins un module d'application de conversion connectable au reste des moyens de conversion et apte à effectuer des fonctions de conversion prédéterminées.
- les modules de gestion de sortie comportent un dispositif de file d'attente apte à concentrer les entrées vers les serveurs.
- elle comporte un module d'administration apte à gérer la création, la suppression, la modification et l'état de fonctionnement des modules de gestion d'entrée et de sortie.

L'invention concerne aussi un système de communication dans un réseau informatique entre une pluralité de machines clients supportant des programmes clients et un ou plusieurs serveurs supportant des programmes d'application, les programmes clients et d'application pouvant être incompatibles, caractérisé par le fait qu'il intègre au moins une unité de multiplexage selon l'invention.

Selon un mode de réalisation, le système comporte un agent de supervision apte à commander le module d'administration de la ou des unités de multiplexage.

Selon une autre possibilité, il comporte des extensions sous forme de bibliothèques à liaison dynamique aptes à être chargées par une unité de multiplexage pour contenir les modules d'application.

L'invention a trait enfin à un procédé de communication dans un réseau informatique entre une pluralité de machines clients supportant des programmes clients et un ou plusieurs serveurs supportant des programmes d'application, les programmes clients et d'application pouvant être incompatibles, apte à être mis en oeuvre par le système selon l'invention comme revendiqué dans la revendication 10.

Ce procédé pourra comporter les étapes suivantes :
- les données de la requête reconnues pour son routage comprennent la nature de son contenu.
- pour le routage de la requête et du message issu du serveur cible, on invoque au moins un module d'application de routage connectable pour effectuer des fonctions de routage prédéterminées.
- pour la conversion de la requête et du message issu du serveur cible, on invoque au moins un module d'application de conversion connectable pour effectuer des fonctions de conversion prédéterminées.
On gère l'étranglement différemment selon le nombre et la nature des modules de gestion de sortie sélectionnés par le mécanisme de routage.
- si un seul module de gestion de sortie a été trouvé lors du routage et reçoit des messages d'étranglement, alors on gère l'étranglement par :
   ■ définition, au niveau du module de gestion de sortie, d'un nombre maximal de messages pouvant être traités par le serveur jusqu'à une nouvelle définition ;
   ■ comptage du nombre de messages clients reçus par le module de gestion de sortie ;
   ■ soustraction du nombre de messages clients reçus du nombre maximal pour obtenir un nombre de messages admissibles, afin de déterminer un niveau d'étranglement.
- Si tous les modules de gestion de sortie trouvés lors du routage reçoivent des messages d'étranglement, on effectue pour chacun les opérations suivantes :
   ■ définition, au niveau du module de gestion de sortie, d'un nombre maximal de messages pouvant être traités par le serveur jusqu'à une nouvelle définition ;
   ■ comptage du nombre de messages clients reçus par le module de gestion de sortie ;
   ■ soustraction du nombre de messages clients reçus du nombre maximal pour obtenir un nombre de messages admissibles, afin de déterminer un niveau d'étranglement.
et on choisit le module de gestion de sortie qui a le meilleur niveau d'étranglement.
- Si une partie seulement des modules de gestion de sortie trouvés lors du routage reçoivent des messages d'étranglement et que l'autre partie n'est pas sujette à l'étranglement :
   1. On effectue, pour chaque module de gestion de sortie recevant des messages d'étranglement, les opérations suivantes :
      ■ définition, au niveau du module de gestion de sortie, d'un nombre maximal de messages pouvant être traités par le serveur jusqu'à une nouvelle définition ;
      ■ comptage du nombre de messages clients reçus par le module de gestion de sortie ;
      ■ soustraction du nombre de messages clients reçus du nombre maximal pour obtenir un nombre de messages admissibles, afin de déterminer un niveau d'étrangtement ;
      ■ on divise le nombre de messages admissibles par le temps restant jusqu'à une nouvelle définition du nombre maximal de messages admissibles pour obtenir une fréquence de soumission de requêtes
      ■ on ajoute au temps courant la fréquence de soumission de requêtes pour déterminer à partir de quand le module de gestion de sortie pourra accepter un nouveau message client.
   2. on oriente le message client vers le premier module de gestion de sortie recevant des messages d'étranglement pouvant l'accepter
   3. on oriente le message client vers un autre module de gestion de sortie, si aucun module de gestion de sortie recevant des messages d'étranglement ne peut l'accepter.
- on répartit la charge entre les modules de gestion de sortie ne recevant pas des messages d'étranglement, par les opérations suivantes :
   1. construction d'un tableau des modules de gestion de sortie ne recevant pas de messages d'étranglement
   2. incrémentation d'un compteur à chaque message client reçu
   3. division entière du nombre du compteur par le nombre de modules de gestion de sortie ne recevant pas de messages d'étranglement
   4. utilisation du reste de la division comme index dans le tableau pour trouver le module de gestion de sortie ne recevant pas de messages d'étranglement à utiliser.

Les dessins ci-joints sont donnés à titre d'exemples indicatifs et non limitatifs. Ils représentent un mode de réalisation. Ils permettront de comprendre aisément l'invention.
Les figures 1 et 2 montrent deux exemples de réalisation de multiplexage selon l'état de la technique.
La figure 3 schématise l'implantation d'un intergiciel entre une partie client et une partie serveur.
La figure 4 est une vue globale de l'invention.
La figure 5 illustre diverses étapes de fonctionnement de l'invention.

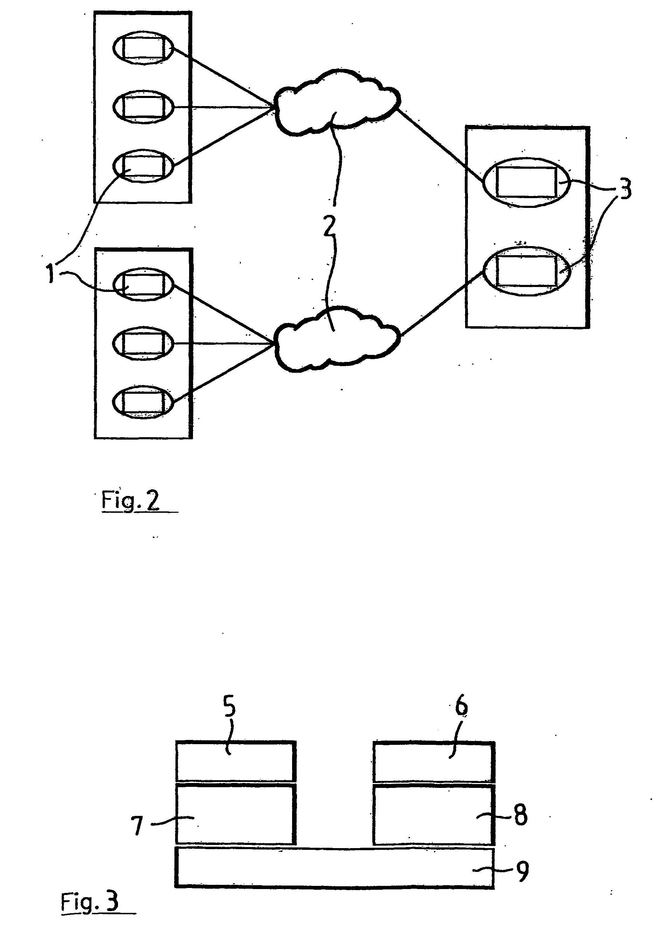

On a représenté en figure 2 une organisation classique de réseau informatique. Dans ce réseau, une pluralité de machines clients 1 est en relation avec un ou plusieurs serveurs 3 qui sont souvent à un emplacement éloigné des machines clients. A titre d'exemple, les clients pourront être des particuliers connectés au réseau par exemple par le biais d'un réseau 2 d'extension mondiale, tel qu'internet, ou des opérateurs spécialisés dans le domaine du voyage. II pourra également s'agir de serveurs informatiques.

Les réseaux mettent couramment en jeu de très nombreuses machines clients. II faut donc préférentiellement chercher à minimiser le nombre de connexions entre les machines clients 1 et les serveurs 3, opérations de concentration et d'aiguillage effectuées par le biais d'un multiplexage.

Dans le cas de la figure 2, certaines machines clients 1 sont, par le biais du réseau 2, mises en relation avec un seul serveur 3. Les clients doivent avoir connaissance du ou des serveurs auxquels ils peuvent se connecter. Le temps d'établissement des connections est très important et en cas de défaillance de la connexion le client ne peut généralement pas savoir si la défaillance est due au réseau ou au serveur. Le seul mécanisme de tolérance aux pannes qu'il peut mettre en oeuvre est d'essayer d'établir une connexion avec un autre serveur offrant le même service, ce qui est long, hasardeux et complique l'utilisation et le développement du programme client.

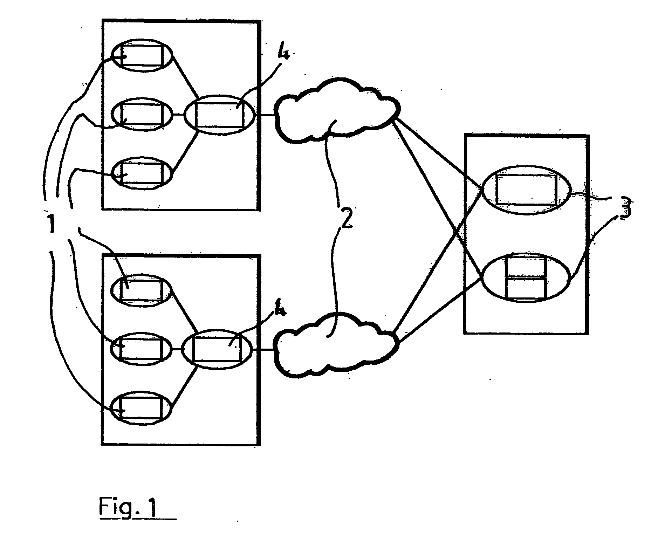

On a proposé des multiplexages permettant un meilleur temps de réponse. Une configuration en est illustrée à la figure 1. Dans ce cadre, des multiplexeurs 4 sont positionnés en aval d'un groupe de machines clients 1 de façon à gérer leurs communications avec le réseau 2.

On comprend que, si les multiplexeurs 4 viennent à être multipliés, la gestion du réseau devient difficile. En effet, en cas d'adaptation, de développement ou d'évolution de certaines parties constitutives du réseau, il est nécessaire d'effectuer des opérations de mises à jour dans des multiplexeurs 4 qui peuvent être éloignés, et parfois localisés chez un client, ou chez un partenaire commercial.

Pour remédier à ces inconvénients et à ceux exposés précédemment pour ce type de multiplexage, on a proposé l'usage d'intergiciels 9 tels que représentés à la figure 3.

A cette figure, un intergiciel 9 constitue un logiciel intermédiaire entre une partie client et une partie serveur.

La partie client comprend une couche d'activité client 5 où sont réalisées certains traitements, ainsi qu'une couche d'interfaçage 7 avec l'intergiciel 9.

D'autre part, une couche d'activité serveur 6 est présente et communique vers l'intergiciel 9 par le biais d'une couche d'interfaçage 8.

Les inconvénients des utilisations d'un intergiciel 9 ont déjà été évoqués précédemment.

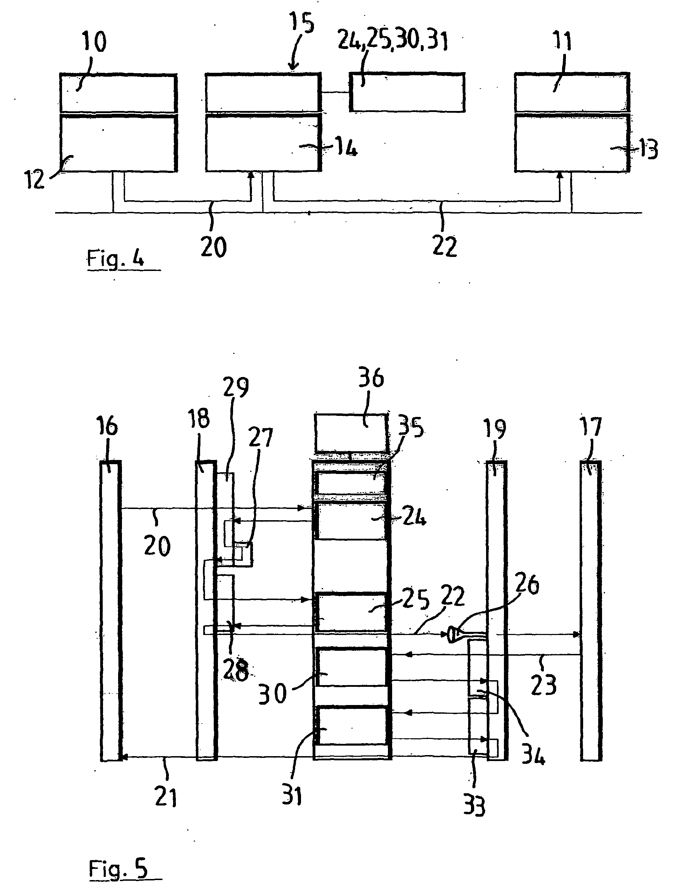

La solution proposée par l'invention est illustrée de façon schématique aux figures 4 et 5.

D'une façon générale, on voit à la figure 4 que l'invention met en relation une couche d'activité client 10 et une couche d'activité serveur 11. Cette mise en relation est effectuée par des couches d'interfaçage réseau standard 12, 13.

Pour effectuer la communication, un système de communication 15 selon l'invention est présent et connecté à une couche réseau standard 14.

De façon schématique, on a représenté le système de communication 15 en deux blocs de diagrammes faisant apparaître la modularité de l'invention.

Sont également figurés, par des flèches, les transferts de messages depuis la couche d'activité client 10 jusqu'à la couche d'activité serveur 11. Le sens des flèches, ici proposé à titre d'exemple, va dans le sens client-serveur, mais la réciproque est également bien entendu effectuée.

Une requête 20 est adressée au système de communication 15 depuis la couche d'activité client 10 et, par le biais du système de communication 15 selon l'invention, est répercutée au niveau de la couche d'activité du serveur 11 en un message client 22.

Pour la transmission d'un tel message client 22 au serveur, des fonctions de routage, et éventuellement de répartition de charge ou encore de conversion, sont effectuées.

Dans la suite de la description et pour la bonne compréhension de l'invention, le terme « requête 20 » désigne un message envoyé par le client et le mot « réponse 21 » un message reçu par le client.

En se référant maintenant à la figure 5, on voit que l'on a représenté, à titre d'exemple, une communication entre une machine client 16 et un serveur 17.

Leur mise en relation s'effectue par le biais d'une unité de multiplexage selon l'invention. Une telle unité pourra mettre en oeuvre une pluralité de machines clients 16 et serveurs 17. Par ailleurs, le système selon l'invention, qui intègre l'unité de multiplexage ainsi présentée, pourra comporter d'autres unités similaires, selon l'invention.

Le système proposé est donc parfaitement modulaire et organisé et peut être contrôlé et administré de façon centralisée.

On décrit ci-après des modes de réalisation particuliers de l'unité de multiplexage selon l'invention.

La figure 5 montre la formation pour chaque machine client 16 d'un module de gestion d'entrée 18. Un tel module de gestion 18 est créé pour chaque type de machine client à relier et peut être modifié ou supprimé selon les besoins.

Le module de gestion d'entrée assure la réception des requêtes 20 provenant de la machine client et la transmission des réponses 21 à ces requêtes 20. On a repéré par une flèche 20 le chemin suivi par la requête issue d'un programme client supportée par la machine client 16.

Par ailleurs on affecte, dans l'unité de multiplexage, un module de gestion de sortie 19 à un ou plusieurs serveurs 17. De façon similaire, le module de gestion de sortie 19 a pour fonction de recevoir les messages à traiter par le ou les serveurs 17 et de les répercuter vers celui-ci ou ceux-ci.

Comme représenté, un système de files d'attente est opéré pour former une file de messages clients 22 à traiter au niveau du module de gestion de sortie 19. Un dispositif de files d'attente repéré 26 est illustré à ce sujet en figure 5.

Des moyens de routage sont présents afin de déterminer un ou des modules de gestion de sortie 19, vers lesquels la requête 20, issue de la machine client, va être transférée,.

En relation d'une part, avec le module de gestion d'entrée 18 et d'autre part avec le module de gestion de sortie 19, les moyens de routage permettent de définir l'identité d'au moins un module de gestion de sortie cible pour le traitement d'une requête 20, et de façon réciproque, l'identité de la machine client à laquelle le message 23 issu du serveur cible doit être adressé.

De façon préférée, les moyens de routage comportent des moyens de répartition de charge 27 qui permettront de définir l'identité d'un unique module de gestion de sortie 19 pour le traitement de la requête 20 selon des paramètres de charges.

Des modes de réalisation de cette répartition seront décrits plus loin, mais on indique d'ores et déjà des paramètres qui pourront être pris en compte : l'état de défaut d'éventuels serveurs, l'étranglement des serveurs, la nature des messages à traiter.

Les conditions de charge sont essentiellement définies dans le système par des messages du nombre maximal de messages normalement issus d'agents d'étranglement. Ces derniers peuvent être installés au niveau des serveurs ou de façon indépendante.

On décrit par ailleurs plus loin un module d'administration 36 qui peut maintenir des valeurs par défaut pour suppléer, le cas échéant, à une défaillance de l'agent d'étranglement.

Selon une possibilité avantageuse, les moyens de routage comportent un ou plusieurs modules d'application de routage 24, 30. Ces modules sont reliés à des sous-systèmes de routage 29, 34 en relation avec les modules de gestion d'entrée 18 et de sortie 19.

Les modules d'application de routage 24, 34 sont connectables au reste des moyens de routage, ce qui assure une parfaite modularité de fonctionnement.

De façon préférée, c'est au niveau des modules d'application 24, 34, que sont prises les décisions d'acheminement. Ces décisions sont ensuite appliquées par le reste des moyens de routage.

Suivant les opérations de routage à effectuer, divers modules d'application pourront être employés et connectés.

Devant l'ampleur des réseaux informatiques mis en jeu, des problèmes de compatibilité se posent quant aux formats et aux protocoles de transfert utilisés par les applications clients et les applications des serveurs.

Pour y remédier, l'unité de multiplexage ici présentée comprend des moyens de conversion. Ces moyens assurent la conversion, si nécessaire, du contenu des requêtes 20 en messages clients 22 compatibles et donc exploitables par le programme d'application du serveur cible 17. De même, les moyens de conversion effectuent une conversion du contenu du message 23 issu du serveur cible 17 en une réponse 21 compatible avec le programme client visé.

Avantageusement, la conception des moyens de conversion est similaire à celle des moyens de routage. On entend par là que les moyens de conversion comportent des sous-systèmes de conversion 28, 33 aptes à communiquer avec des modules d'application de conversion 25, 31 auxquels ils sont connectés. De façon parallèle aux moyens de routage, il sera possible d'employer et de faire évoluer les modules d'application 25, 31 selon les fonctions de conversion à effectuer.

Un module d'application est associé par configuration avec un module de gestion d'entrée ou de sortie. En conséquence, il est possible de faire coexister au sein d'une unité de multiplexage selon l'invention plusieurs modules d'application différents. Il est également possible d'en modifier ou d'en mettre en oeuvre de nouveaux sans arrêter l'unité de multiplexage.

Les sous-systèmes tels que présentés pourront invoquer un ou plusieurs modules d'applications connectables.

Au sein de l'unité de multiplexage, on formera préférentiellement un module d'administration 36. Le module d'administration 36 gère les modules de gestion d'entrée 18 et de sortie 19 de l'unité. Le module 36 crée, supprime ou modifie les modules de gestion d'entrée et de sortie. Par ailleurs, il pourra opérer des fonctions statistiques et de vérification de l'état des modules, y compris l'état de leur charge et de leur étranglement. Selon une possibilité avantageuse, l'administration peut être étendue par un ou plusieurs modules d'application d'administration 35. Ces modules permettent l'administration des modules d'application de routage et de conversion et en particulier de leur fournir des tables de routage et des descriptions de messages.

Plusieurs unités de multiplexage telles qu'elles viennent d'être décrites peuvent être employées afin de constituer un système de communication selon l'invention. Dans ce cadre, les unités de multiplexage seront utilisées en parallèle et géreront une pluralité de machines clients 16 et de serveurs 17.

De cette façon, le contrôle du système de communication s'effectue de façon centralisée pour toutes les unités de multiplexage. Ainsi, le système pourra comprendre un agent de supervision apte à commander les modules d'administration 36 des unités.

Par différents outils de gestion et de contrôle, un opérateur, par exemple par le biais d'une interface graphique, peut gérer et contrôler le système en agissant sur l'agent de supervision, lui-même commandant les modules d'administration 36.

Par ailleurs, la mise en parallèle de plusieurs unités de multiplexage peut s'effectuer en relation avec l'utilisation d'extensions sous forme de bibliothèques à liaison dynamique (DLL - Dynamic Link Libraries). Ces extensions pourront être chargées, sur demande, par l'une ou l'autre des unités de multiplexage afin d'étendre ses fonctionnalités. Ces fonctionnalités pourront servir aux sous-systèmes de routage 29, 34, aux sous-systèmes de conversion 28, 33 et à la supervision et à l'administration des unités de multiplexage.

Ces bibliothèques à liaison dynamique pourront constituer l'ensemble des éléments suivants: modules d'applications 24, 25, 30, 31 et d'application d'administration 35.

Les fonctionnalités du système pourront également être étendues par ce biais en ce qui concerne la gestion de l'étranglement du serveur.

On décrit ci-après le procédé de communication selon l'invention qui pourra être mis en oeuvre, à la fois par le système de communication précédemment décrit, et par les unités de multiplexage comprises dans le système, et faisant partie intégrante de l'invention.

On se réfère encore à la figure 5 pour illustrer les étapes de ce procédé.

Comme précédemment indiqué en ce qui concerne l'unité de multiplexage, les clients se connectent à un module de gestion d'entrée. Un module de gestion de sortie se connecte à un ou plusieurs serveurs ou selon un autre mode attend les connections des serveurs. On retrouve le principe de l'invention qui est d'accommoder sans modification les clients et serveurs existants et leurs contraintes d'opération. Lorsqu'une requête 20 doit être adressée au reste du système pour son traitement, elle est routée vers un serveur 17 en observation des données de routage. Parmi ceux-ci figure l'adresse du module de gestion d'entrée 18 et l'adresse réseau de la machine client 16.

D'autres paramètres pourront servir à déterminer l'acheminement de la requête 20, et notamment le contenu de la requête. Ainsi, le routage comprendra une opération de contrôle et d'analyse du contenu de la requête 20.

De façon préférée, l'étape de routage s'effectue en deux temps, l'un partant d'un sous-système de routage 29 en liaison avec le module de gestion d'entrée 18. Le second est réalisé en invoquant au moins un module d'application de routage 24 connectable au sous-système 29. En disposant des paramètres de routage, le module d'application 24 détermine l'identité d'un ou plusieurs modules de gestion de sortie 19. Le routage est alors appliqué par le sous-système 29.

Dans le cas où plusieurs possibilités de serveurs cibles ont été définies, on pourra en élire un seul selon des critères de répartition de charges.

On décrira plus loin des variantes de l'invention aptes à effectuer une telle répartition de charges entre les modules de gestion de sortie 19 selon des critères d'étranglement.

Lorsque l'identité du module de gestion de sortie 19 est déterminée à la fin de l'opération de routage, on effectue une étape de conversion de la requête 20 en un message client 22 compatible avec les serveurs cibles 17.

Lorsqu'elle est nécessaire, l'opération de conversion peut s'effectuer également en deux temps. Le premier consiste à invoquer depuis un sous-système de conversion 28, un module d'application de conversion 25 qui est connecté. Le sous-système 28 invoque un ou plusieurs module d'application de conversion 25 selon la fonction de conversion à opérer.

Le module d'application de conversion 25 retourne au sous-système 28 un message client 22 compatible avec le serveur 17.

Ce message client 22 est transféré au serveur 17 via le module de gestion de sortie 19 du serveur 17.

Au niveau du module de gestion de sortie 19, une file d'attente est créée pour recevoir les messages clients 22, jouer un rôle de tampon et envoyer les messages, successivement au serveur 17.

Une file d'attente est requise dans la mesure où les modules de gestion d'entrée 18 sont « multithread » : c'est-à-dire capable de déposer plusieurs requêtes simultanément.

Un chemin d'exécution « thread » différent est associé à chaque serveur 17 et les différents chemins d'exécution retirent des messages en parallèle de la file d'attente 26.

Une fois le message client traité au niveau du serveur 17, celui-ci retourne un message serveur 23.

De façon correspondante à ce qui a été décrit au niveau du module de gestion 18, une opération de routage puis une opération de conversion est effectuée par invocation de modules d'application de routage 30 et de conversion 31.

Le routage du message 23 s'effectue en fonction de la reconnaissance de la nature de ce message 23.

L'opération de conversion pourrait être effectuée avant la fonction de routage, mais elle est préférentiellement réalisée après. En effet, il s'agit d'une opération plus longue, mais d'issue moins incertaine que celle du routage.

Selon une variante préférée du procédé selon l'invention, on gère l'étranglement du ou des serveurs, ou pour le moins une partie des serveurs 17 compris dans le système.

On gère l'étranglement différemment selon le nombre et la nature des modules de gestion de sortie sélectionnés par le mécanisme de routage.

Si un seul module de gestion de sortie a été trouvé lors du routage et reçoit des messages d'étranglement, alors on gère son étranglement par :
■ définition, au niveau du module de gestion de sortie, d'un nombre maximal de messages pouvant être traités par le serveur jusqu'à une nouvelle définition ;
■ comptage du nombre de messages reçus par le module de gestion de sortie ;
■ soustraction du nombre de messages du nombre maximal pour obtenir un nombre de messages admissibles, afin de déterminer un niveau d'étranglement.

Si tous les modules de gestion de sortie trouvés reçoivent des messages d'étranglement, alors chaque module de gestion de sortie maintient un nombre de messages admissibles comme décrit plus haut. Le mécanisme de routage choisit le module de gestion de sortie avec le plus grand nombre de messages admissibles, c'est-à-dire le meilleur niveau d'étranglement.

Si une partie des modules de gestion de sortie trouvés reçoivent des messages d'étranglement et une autre partie n'en reçoit pas et n'est donc pas sujette à étranglement, le routage vise à utiliser au maximum, dans les limites de l'étranglement imposé, les modules de gestion de sortie étranglés puis a repartir équitablement la charge restante entre les modules de gestion de sortie non étranglés. Pour cela, on calcule pour chaque module de gestion de sortie étranglé, une fréquence de soumission de requête en divisant le nombre de messages admissibles par le temps restant jusqu'à une nouvelle définition du nombre maximal de messages admissibles et à partir de cette fréquence, à partir de quand ce module de gestion de sortie pourra accepter une requête. Le mécanisme de routage choisit le premier module de gestion de sortie étranglé pouvant accepter une requête et si il n'en trouve aucun, il choisit un module de gestion non étranglé selon le mécanisme de répartition de charge par défaut.

A cet effet, et selon une variante préférée, on maintient un compteur qui est augmente de un à chaque message reçu et réinitialise en cas de dépassement de capacité. Le mécanisme de routage construit un tableau des modules de gestion de sortie sélectionnés. Il calcule le reste de la division entière du compteur par le nombre de modules de gestion de sortie sélectionnés et sélectionne le module de gestion de sortie correspondant à cet indice dans le tableau.

### REFERENCES

1. Machines clients
2. Réseaux de communication
3. Serveur
4. Multiplexeur
5. Couche d'activité client
6. Couche d'activité serveur
7. Couche d'interfaçage à l'intergiciel
8. Couche d'interfaçage à l'intergiciel
9. Intergiciel
10. Couche d'activité client
11. Couche d'activité serveur
12. Couche d'interfaçage réseau
13. Couche d'interfaçage réseau
14. Couche générique de réseau
15. Système de communication
16. Machine client
17. Serveur
18. Module de gestion d'entrée
19. Module de gestion de sortie
20. Requête
21. Réponse
22. Message client
23. Message serveur
24, 30. Module d'application de routage
25. 31. Module d'application de conversion
26. Dispositif de file d'attente
27. Moyens de répartition de charge
28, 33. Sous-système de conversion
29, 34. Sous-système de routage
35. Module d'application d'administration.
36. Module d'administration

## Revendications

1. Unité de multiplexage pour la communication dans un réseau informatique entre une pluralité de machines clients (16) supportant des programmes clients et plusieurs serveurs (17) supportant des programmes d'application, les programmes clients et d'application pouvant être incompatibles, ladite unité comprenant des moyens de routage et des moyens de conversion, **caractérisée par le fait**
**qu'**elle comprend :
- pour chaque type de machine client (16), un module de gestion d'entrée (18) recevant les requêtes (20) des programmes client et leur transmettant les réponses (21) ;
- pour un serveur (17) ou un groupe de serveurs, un module de gestion de sortie (19) transmettant au serveur les messages clients (22) qui lui sont adressés et transmettant les réponses (21) aux modules de gestion d'entrée (18) des machines clients (16) et par le fait que:
- les moyens de routage (24, 30, 29, 34) sont connectés aux modules de gestion d'entrée (18) et de sortie (19) et aptes à définir l'identité d'au moins un module de gestion de sortie (19) pour le traitement d'une requête (20) et à déterminer l'identité de la machine client (16) à laquelle le message (23) issu du serveur cible (17) doit être adressé ;
- les moyens de conversion (28, 33, 25, 31) sont aptes à convertir, si nécessaire, le contenu de la requête (20) en un message client (22) compatible avec le programme d'application du serveur cible (17) et le contenu du message (23) issu du serveur cible (17) en une réponse (21) compatible avec le programme client.

2. Unité, selon la revendication 1, **caractérisée par le fait**
**que** les moyens de routage comportent des moyens de répartition de charge (27) aptes à définir l'identité d'un serveur cible (17) pour le traitement d'une requête (20), selon des conditions de charge.

3. Unité, selon la revendication 1 ou 2, **caractérisée par le fait**
**que** les moyens de routage comportent au moins un module d'application de routage (24, 30) connectable au reste des moyens de routage et apte à effectuer des fonctions de routage selon des règles prédéterminées.

4. Unité, selon l'une quelconque des revendications 1 à 3, **caractérisée par le fait**
**que** les moyens de conversion comportent au moins un module d'application de conversion (25, 31) connectable au reste des moyens de conversion et apte à effectuer des fonctions de conversion prédéterminées.

5. Unité, selon l'une quelconque des revendications 1 à 4, **caractérisée par le fait**
**que** les modules de gestion de sortie comportent un dispositif de file d'attente (26) apte à concentrer les entrées vers les serveurs (17).

6. Unité, selon l'une quelconque des revendications 1 à 5, **caractérisée par le fait**
**qu'**elle comporte un module d'administration (36) apte à gérer la création, la suppression, la modification et l'état de fonctionnement des modules de gestion d'entrée (18) et de sortie (19).

7. Système de communication dans un réseau informatique entre une pluralité de machines clients (16) supportant des programmes clients et un ou plusieurs serveurs (17) supportant des programmes d'application, les programmes clients et d'application pouvant être incompatibles, **caractérisé par le fait**
**qu'**il intègre au moins une unité de multiplexage selon l'une quelconque des revendications 1 à 6.

8. Système de communication dans un réseau informatique entre une pluralité de machines clients (16) supportant des programmes clients et un ou plusieurs serveurs (17) supportant des programmes d'application, les programmes clients et d'application pouvant être incompatibles, **caractérisé par le fait**
**que**
- il intègre au moins une unité de multiplexage selon la revendication 6
- il comporte un agent de supervision apte à commander le module d'administration de la ou des unités de multiplexage.

9. Système de communication dans un réseau informatique entre une pluralité de machines clients (16) supportant des programmes clients et un ou plusieurs serveurs (17) supportant des programmes d'application, les programmes clients et d'application pouvant être incompatibles, **caractérisé par le fait**
- **qu'**il intègre au moins une unité de multiplexage selon la revendication 3 ou la revendication 4,
- **qu'**il comporte des extensions sous forme de bibliothèques à liaison dynamique aptes à être chargées par une unité de multiplexage pour contenir les modules d'application (24, 30 ; 25, 31).

10. Procédé de communication dans un réseau informatique entre une pluralité de machines clients (16) supportant des programmes clients et un ou plusieurs serveurs (17) supportant des programmes d'application, les programmes clients et d'application pouvant être incompatibles, procédé dans lequel on effectue des actions de routage et de conversion, apte à être mis en oeuvre par le système selon les revendications 7, 8 ou 9, **caractérisé par le fait**
**que**
- on connecte chaque machine client (16) d'un type considéré à un module de gestion d'entrée (18) recevant les requêtes (20) du programme client et lui transmettant les réponses (21) ;
- on connecte à un serveur (17) un module de gestion de sortie (19) transmettant au serveur (17) les messages clients (22) qui lui sont adressés et transmettant les réponses (21) aux modules de gestion d'entrée (18) des machines clients (16) ;
- on route la requête (20) par reconnaissance des données de la requête (20) dont l'adresse du module de gestion d'entrée (18) et l'adresse réseau de la machine client (16) d'où elle provient, puis on détermine au moins un serveur cible (17) selon ces données ;
- on convertit la requête (20) en un message client (22) de format compatible avec le ou les serveurs cibles (17) ;
- on achemine le message client (22) au module de gestion de sortie (19) du serveur cible (17) pour transmission ;
- on route le message (23) issu du serveur cible (17) et transmis par le module de gestion de sortie (19) par reconnaissance du message (23) issu du serveur cible (17), puis on détermine la machine client correspondante (16) selon le résultat de cette reconnaissance ;
- on convertit, si nécessaire, avant ou après son routage, le message (23) issu du serveur cible (17) en une réponse (21) de format compatible avec la ou les machines clients (16) ;
- on achemine la réponse (21) au module de gestion d'entrée (18) de la machine client (16) pour transmission.

11. Procédé de communication, selon la revendication 10, **caractérisé par le fait**
**que** les données de la requête (20) reconnues pour son routage comprennent la nature de son contenu.

12. Procédé de communication, selon la revendication 10 ou 11, **caractérisé par le fait**
**que** pour le routage de la requête (20) et du message (23) issu du serveur cible (17), on invoque au moins un module d'application de routage (24,30) connectable pour effectuer des fonctions de routage prédéterminées.

13. Procédé de communication selon l'une quelconque des revendications 10 à 12, **caractérisé par le fait**
**que** pour la conversion de la requête (20) et du message (23) issu du serveur cible (17), on invoque au moins un module d'application de conversion (25, 31) connectable pour effectuer des fonctions de conversion prédéterminées.

14. Procédé de communication, selon l'une quelconque des revendications 10 à 13, **caractérisé par le fait**
**que** si un seul module de gestion de sortie (19) a été trouvé lors du routage et reçoit des messages d'étranglement, alors on gère l'étranglement par :
■ définition, au niveau du module de gestion de sortie (19), d'un nombre maximal de messages pouvant être traités par le serveur (17) jusqu'à une nouvelle définition ;
■ comptage du nombre de messages reçus par le module de gestion de sortie (19) ;
■ soustraction du nombre de messages du nombre maximal pour obtenir un nombre de messages admissibles, afin de déterminer un niveau d'étranglement.

15. Procédé de communication, selon l'une quelconque des revendications 10 à 13, **caractérisé par le fait**
**que** si tous les modules de gestion de sortie (19) trouvés lors du routage reçoivent des messages d'étranglement, on effectue pour chacun les opérations suivantes :
■ définition, au niveau du module de gestion de sortie (19), d'un nombre maximal de messages pouvant être traités par le serveur (17) jusqu'à une nouvelle définition ;
■ comptage du nombre de messages clients (22) reçus par le module de gestion de sortie (19) ;
■ soustraction du nombre de messages clients (22) reçus du nombre maximal pour obtenir un nombre de messages admissibles, afin de déterminer un niveau d'étranglement.
et on choisit le module de gestion de sortie (19) qui a le meilleur niveau d'étranglement.

16. Procédé de communication, selon l'une quelconque des revendications 10 à 13, **caractérisé par le fait**
**que** si une partie seulement des modules de gestion de sortie (19) trouvés lors du routage reçoivent des messages d'étranglement et que l'autre partie n'est pas sujette à l'étranglement :
1. On effectue, pour chaque module de gestion de sortie (19) recevant des messages d'étranglement, les opérations suivantes :
■ définition, au niveau du module de gestion de sortie (19), d'un nombre maximal de messages pouvant être traités par le serveur (17) jusqu'à une nouvelle définition ;
■ comptage du nombre de messages clients (22) reçus par le module de gestion de sortie (19) ;
■ soustraction du nombre de messages clients (22) reçus du nombre maximal pour obtenir un nombre de messages admissibles, afin de déterminer un niveau d'étranglement ;
■ on divise le nombre de messages admissibles par le temps restant jusqu'à une nouvelle définition du nombre maximal de messages admissibles pour obtenir une fréquence de soumission de requêtes
■ on ajoute au temps courant la fréquence de soumission de requêtes pour déterminer à partir de quand le module de gestion de sortie (19) pourra accepter un nouveau message client (22).
2. on oriente le message client (22) vers le premier module de gestion de sortie (19) recevant des messages d'étranglement pouvant l'accepter
3. on oriente le message client (22) vers un autre module de gestion de sortie (19), si aucun module de gestion de sortie (19) recevant des messages d'étranglement ne peut l'accepter.

17. Procédé de communication, selon la revendication 16, **caractérisé par le fait**
**qu'**on répartit la charge entre les modules de gestion de sortie (19) ne recevant pas des messages d'étranglement, par les opérations suivantes :
1. construction d'un tableau des modules de gestion de sortie (19) ne recevant pas de messages d'étranglement
2. incrémentation d'un compteur à chaque message client (22) reçu
3. division entière du nombre du compteur par le nombre de modules de gestion de sortie (19) ne recevant pas de messages d'étranglement
4. utilisation du reste de la division comme index dans le tableau pour trouver le module de gestion de sortie (19) ne recevant pas de messages d'étranglement à utiliser.

## Patentansprüche

1. Multiplexereinheit für den Dialog in einem Informatiknetzwerk zwischen einer Mehrzahl von Client-Rechnern (16), die Client-Programme unterstützen, und einer Mehrzahl von Servern (17), die Anwenderprogramme unterstützen, wobei die Client- und Anwenderprogramme inkompatibel sein können und die genannte Einheit Rountingsmittel und Mittel zur Umsetzung besitzt, **gekennzeichnet dadurch, dass** sie folgende Baugruppen enthält:
- für jeden Typ Client-Rechner (16) ein Eingangs-Managementmodul (18), das die Anfragen (20) der Client-Programme empfängt und die Antworten (21) an sie überträgt.
- für einen Server (17) oder eine Gruppe von Servern, ein Ausgangs-Managementmodul (19), das dem Server die an ihn gerichteten Client-Mitteilungen (22) sendet und die Antworten (21) an die Eingangs-Managementmodule (18) der Client-Rechner (16) sendet, und dadurch, dass,
- die Routingsmittel (24, 30, 29, 34) mit den Eingangs- (18) und Ausgangs-Managementmodulen (19) verbunden sind und die Identität mindestens eines Ausgangs-Managementmoduls (19) festlegen können, um die Anfrage (20) zu verarbeiten und den Client-Rechner (16) festzulegen, an den die aus dem Ziel-Server (17) kommende Mitteilung (23) gerichtet werden soll,
- die Mittel zur Umsetzung (28, 33, 25, 31), wenn notwendig, den Inhalt der Anfrage (20) in eine mit dem Anwenderprogramm des Ziel-Servers (17) kompatible Client-Mitteilung (22) und den Inhalt der aus dem Ziel-Server (17) kommenden Mitteilung (23) in eine mit dem Client-Programm kompatible Antwort (21) umsetzen können.

2. Einheit gemäß Anspruch 1, **gekennzeichnet dadurch, dass** die Routingsmittel Einrichtungen zur Lastaufteilung (27) besitzen, welche zur Verarbeitung einer Anfrage (20), je nach Auslastungsbedingungen, einen Ziel-Server (17) festlegen können.

3. Einheit gemäß Anspruch 1 oder 2, **gekennzeichnet dadurch, dass** die Routingsmittel mindestens ein Routing-Applikationsmodul (24, 30) besitzen, das mit den übrigen Routingseinrichtungen verbindbar ist und die Routingfunktionen entsprechend vorgegebenen Regeln ausführen kann.

4. Einheit gemäß einem der Ansprüche 1 bis 3, **gekennzeichnet dadurch, dass** die Mittel zur Umsetzung mindestens ein Applikationsmodul für die Umsetzung (25, 31) besitzen, das mit den übrigen Umsetzungseinrichtungen verbindbar ist und die vorgegebenen Umsetzungsfunktionen ausführen kann.

5. Einheit gemäß einem der Ansprüche 1 bis 4, **gekennzeichnet dadurch, dass** die Ausgangs-Managementmodule eine Warteschlangeneinrichtung (26) besitzen, welche die Eingänge auf die Server (17) konzentrieren kann.

6. Einheit gemäß einem der Ansprüche 1 bis 5, **gekennzeichnet dadurch, dass** sie ein Managementmodul (36) besitzt, das die Erstellung, die Löschung, die Änderung und den Betriebszustand der Ein- (18) und Ausgangs- (19) Managementmodule steuern kann.

7. Kommunikationssystem in einem EDV-Netzwerk zwischen einer Mehrzahl von Client-Rechnern (16), die Client-Programme unterstützen, und einem oder mehreren Servern (17), die Applikationsprogramme unterstützen, wobei die Client- und Applikationsprogramme inkompatibel sein können, **gekennzeichnet dadurch, dass** es mindestens eine Multiplexereinheit gemäß einem der Ansprüche 1 bis 6 integriert.

8. Kommunikationssystem in einem EDV-Netzwerk zwischen einer Mehrzahl von Client-Rechnern (16), die Client-Programme unterstützen, und einem oder mehreren Servern (17), die Applikationsprogramme unterstützen, wobei die Client- und Applikationsprogramme inkompatibel sein können, **gekennzeichnet dadurch, dass**
- es mindestens eine Multiplexereinheit gemäß Anspruch 6 integriert,
- es umfasst eine Überwachungseinrichtung, mit welcher das Managementmodul der einen oder mehreren Multiplexereinheiten gesteuert werden kann.

9. Kommunikationssystem in einem EDV-Netzwerk zwischen einer Mehrzahl von Client-Rechnern (16), die Client-Programme unterstützen, und einem oder mehreren Servern (17), die Applikationsprogramme unterstützen, wobei die Client- und Applikationsprogramme inkompatibel sein können, **gekennzeichnet dadurch,**
- **dass** es mindestens eine Multiplexereinheit gemäß Anspruch 3 oder Anspruch 4 integriert,
- **dass** es Erweiterungen in Form von Bibliotheken mit dynamischer Schnittstelle umfasst, die von einer Multiplexereinheit geladen werden können, um die Applikationsmodule (24, 30, 25, 31) zu enthalten.

10. Kommunikationsverfahren in einem EDV-Netzwerk zwischen einer Mehrzahl von Client-Rechnern (16), die Client-Programme unterstützen, und einem oder mehreren Servern (17), die Applikationsprogramme unterstützen, wobei die Client- und Applikationsprogramme inkompatibel sein können, das Verfahren zur Ausführung von Routing- und Umsetzungsaktionen verwandt wird und in dem System gemäß Anspruch 7, 8 oder 9 eingesetzt werden kann, **gekennzeichnet dadurch,**
- **dass** jeder Client-Rechner (16) eines bestimmten Typs mit einem Eingangs-Managementmodul (18) verbunden wird, das die Anfragen (20) des Client-Programms empfängt und ihm die Antworten (21) überträgt,
- **dass** an einen Server (17) ein Ausgangs-Managementmodul (19) verbunden wird, das dem Server (17) die an es gerichteten Client-Mitteilungen (22) sendet und die Antworten (21) an die Eingangs-Managementmodule (18) der Client-Rechner (16) überträgt,
- **dass** das Routing der Anfrage (20) durch Erkennung der Daten der Anfrage (20) erfolgt, darunter der Adresse des Eingangs-Managementmoduls (18) und der Netzwerkadresse des Client-Rechners (16), der sie gesandt hat, und dass anschließend anhand dieser Daten mindestens ein Ziel-Server (17) ermittelt wird,
- **dass** die Anfrage (20) in eine Client-Mitteilung (22), deren Format mit dem oder der Ziel-Servern (17) kompatibel ist, umgesetzt wird,
- **dass** die Client-Mitteilung (22) zur Weiterleitung an das Ausgangs-Managementmodul (19) des Ziel-Servers (17) gesandt wird,
- **dass** das Routing der aus dem Ziel-Server (17) kommenden und vom Ausgangs-Managementmodul (19) übermittelten Mitteilung (23) durch Erkennung der aus dem Ziel-Server (17) kommenden Mitteilung (23) erfolgt und anschließend, entsprechend dem Ergebnis der Erkennung, der entsprechende Client-Rechner (16) festgelegt wird,
- **dass** die aus dem Ziel-Server (17) kommende Mitteilung (23), wenn notwendig, vor oder nach dem Routing in eine Antwort (21) umgesetzt wird, deren Format mit dem oder den Client-Rechnern (16) kompatibel ist,
- **dass** die Antwort (21) zur Weiterleitung an das Eingangs-Managementmodul (18) des Client-Rechners (16) gesandt wird,

11. Kommunikationsverfahren gemäß Anspruch 10, **gekennzeichnet dadurch, dass** die Daten der Anfrage (20), die zum Routing erkannt werden, die Art ihres Inhalts enthalten.

12. Kommunikationsverfahren gemäß Anspruch 10 oder 11, **gekennzeichnet dadurch, dass** zum Routing der Anfrage (20) und der aus dem Ziel-Server (17) kommenden Mitteilung (23) mindestens ein Routing-Applikationsmodul (24, 30) angesteuert wird, das zur Ausführung der vorbestimmten Routingsfunktionen anschließbar ist.

13. Kommunikationsverfahren gemäß einem der Ansprüche 10 bis 12, **gekennzeichnet dadurch, dass** zur Umsetzung der Anfrage (20) und der aus dem Ziel-Server (17) kommenden Mitteilung (23) mindestens ein Applikationsmodul für die Umsetzung (25, 31) angesteuert wird, das zur Ausführung der vorbestimmten Umsetzungsfunktionen anschließbar ist.

14. Kommunikationsverfahren gemäß einem der Ansprüche 10 bis 13, **gekennzeichnet dadurch, dass**, wenn ein einziges Ausgangs-Managementmodul (19) bei dem Routing gefunden wurde und Flaschenhals-Mitteilungen empfangen werden, diese Flaschenhälse wie folgt zu verwalten sind:
o Festlegung einer maximalen Zahl von Mitteilungen auf Ebene des Ausgangs-Managementmoduls (19), die vom Server (17) bis zur nächsten Festlegung verarbeitet werden können,
o Zählung der vom Ausgangs-Managementmodul (19) empfangenen Mitteilungen,
o Subtraktion der Zahl der Mitteilungen von der maximalen Zahl, um zu einer zulässigen Zahl von Mitteilungen zu gelangen und einen neuen Flaschenhals festzulegen.

15. Kommunikationsverfahren gemäß einem der Ansprüche 10 bis 13, **gekennzeichnet dadurch, dass**, wenn alle Ausgangs-Managementmodule (19), die bei dem Routing gefunden wurden, Flaschenhals-Mitteilungen empfangen, für jeden von diesen folgende Verarbeitungsschritte ausgeführt werden:
o Festlegung einer maximalen Zahl von Mitteilungen auf Ebene des Ausgangs-Managementmoduls (19), die vom Server (17) bis zu einer neuen Festlegung verarbeitet werden können,
o Zählung der vom Ausgangs-Managementmodul (19) empfangenen Client-Mitteilungen (22),
o Subtraktion der Zahl der empfangenen Client-Mitteilungen (22) von der maximalen Zahl, um zu einer zulässigen Zahl von Mitteilungen zu gelangen und einen neuen Flaschenhals festzulegen,
sowie die Wahl des Ausgangs-Managementmoduls (19), der den günstigsten Flaschenhals besitzt.

16. Kommunikationsverfahren gemäß einem der Ansprüche 10 bis 13, **gekennzeichnet dadurch, dass**, wenn nur ein Teil der Ausgangs-Managementmodule (19), die bei dem Routing gefunden wurden, Flaschenhals-Mitteilungen empfangen, und die übrigen von diesem Flaschenhals nicht betroffen sind:
1. für jedes, diese Flaschenhals-Mitteilungen empfangenden Ausgangs-Managementmodule (19) folgende Verarbeitungsschritte durchgeführt werden:
o Festlegung einer maximalen Zahl von Mitteilungen auf Ebene des Ausgangs-Managementmoduls (19), die vom Server (17) bis zu einer neuen Festlegung verarbeitet werden können,
o Zählung der vom Ausgangs-Managementmodul (19) empfangenen Client-Mitteilungen (22),
o - Subtraktion der Zahl der empfangenen Client-Mitteilungen (22) von der maximalen Zahl, um zu einer zulässigen Zahl von Mitteilungen zu gelangen und einen neuen Flaschenhals festzulegen,
o Teilung der Zahl der zulässigen Mitteilungen durch die bis zur nächsten Festlegung der maximal zulässigen Zahl von Mitteilungen verbleibenden Zeit, um eine Anfragefrequenz zu ermitteln,
o Hinzufügen der Anfragefrequenz zur aktuellen Zeit, um zu bestimmen, ab wann das Ausgangs-Managementmodul (19) wieder eine neue Client-Mitteilung (22) entgegennehmen kann,
2. Weiterleitung der Client-Mitteilung (22) an das erste Ausgangs-Managementmodul (19), das die Flaschenhals-Mitteilungen empfängt und sie entgegennehmen kann,
3. Weiterleitung der Client-Mitteilung (22) an ein anderes Ausgangs-Managementmodul (19), wenn keines der die Flaschenhals-Mitteilungen empfangenden Ausgangs-Managementmodule (19) diese entgegennehmen kann.

17. Kommunikationsverfahren gemäß Anspruch 16, **gekennzeichnet dadurch, dass** die Last auf diejenigen Ausgangs-Managementmodule (19) verteilt wird, welche die Flaschenhals-Mitteilungen nicht empfangen, durch folgende Verarbeitungsschritte:
1. Anlage einer Tabelle von Ausgangs-Managementmodulen (19), welche die Flaschenhals-Mitteilungen nicht erhalten,
2. Inkrementierung eines Zählers bei jeder eingegangenen Client-Mitteilung (22),
3. ganzzahlige Teilung des Zählerstandes durch die Zahl der Ausgangs-Managementmodule (19), welche die Flaschenhals-Mitteilungen nicht erhalten,
4. Verwendung des bei der Teilung verbleibenden Rests als Zeiger in der Tabelle, um den Ausgangs-Managementmodul (19) zu finden, der keine zu verwendende Flaschenhals-Mitteilung erhält.

## Claims

1. Multiplexing unit for communications within a computer network between multiple client machines (16) that support client programs and several servers (17) that support application programs, the client programs and application programs eventually being incompatible and said unit including routing means and conversion means, **characterised in that** it includes:
- for each type of client machine (16), an input management module (18) receiving requests (20) from client programs and transmitting answers (21) to them;
- for a server (17) or a group of servers, an output management module (19) transmitting to the server client messages (22) sent to it and transmitting answers (21) to input management modules (18) from client machines (16) and by the fact that:
- routing means (24, 30, 29, 34) are connected to the input (18) and output (19) management modules and are capable of defining the identity of at least one input management module (19) in order to process a request (20) and determine the identity of the client machine (16) to which message (23) from target server (17) has to be sent;
- if necessary, conversion means (28, 33, 25, 31) are capable of converting the contents of a request (20) into a client message (22) compatible with the application program of the target server (17) and the contents of message (23) from target server (17) into a response (21) compatible with the client program.

2. Unit according to claim 1, **characterised in that**
the routing means include load sharing means (27) capable of defining the identity of a target server (17) for processing a request (20), according to the load conditions.

3. Unit according to claim 1 or 2, **characterised in that**
routing means include at least one routing application module (24, 30) connectable to the remainder of the routing means and capable of carrying out the routing functions according to predetermined rules.

4. Unit according to any of claims 1 to 3, **characterised in that**
the conversion means include at least one conversion application module (25, 31) connectable to the remainder of the conversion means and able to carry out predetermined conversion functions.

5. Unit according to any of claims 1 to 4, **characterised in that**
the output modules include a queuing device (26) with the capacity to concentrate the inputs on the servers (17).

6. Unit according to any of claims 1 to 5, **characterised in that**
it includes an administration module (36) with the capacity to manage the creation, deletion, modification and operating status of input management modules (18) and output management modules (19).

7. Communication system between multiple client machines (16) in a computer network on which client programs are installed and one or more servers (17) on which application programs are installed, the client and application programs eventually being incompatible, **characterised in that**
it integrates at least one multiplexing unit according to any of claims 1 to 6.

8. Communication system in a computer network between multiple client machines (16) that support client programs and one or more servers (17) that support application programs, the client and application programs eventually being incompatible, **characterised in that**
- it integrates at least one multiplexing unit according to claim 6
- it includes a supervisory agent able to control the administration module of the multiplexing units.

9. Communication system in a computer network between multiple client machines (16) that support client programs and one or more servers (17) that support application programs, the client and application programs in question eventually being incompatible, **characterised in that**
- it integrates at least one multiplexing unit according to claim 3 or claim 4,
- it includes extensions in the form of libraries with dynamic connexion that can be loaded by a multiplexing unit to contain application modules (24, 30; 25, 31).

10. Communication process in a computer network between multiple client machines (16) that support client programs and one or more servers (17) that support application programs, the said client and application programs eventually being incompatible, in which routing actions and conversion actions capable of being implemented by the system according to claims 7, 8 or 9 are carried out, **characterised in that**
- each client machine of a given type (16) is connected to an input management module (18) receiving requests (20) from the client program and transmitting the answers (21) to it;
- a server (17) is connected to an output management module (19) transmitting the client messages (22) addressed to it to the server (17) and transmitting the answers (21) to the input management modules (18) of the client machines (16);
- request (20) is routed by recognition of the request data (20) including the address of the input management module (18) and the network address of the client machine (16) from which it comes, then determining at least one target server (17) according to these data;
- request (20) is converted into a client message (22) in a format which is compatible with the target servers (17);
- client message (22) is routed to output management module (19) from the target server (17) for transmission;
- message (23) from target server (17) is routed and transmitted by output management module (19) by recognition of message (23) from target server (17), followed by determination of the corresponding client machine (16) based on the result of this recognition;
- if necessary, before or after its routing, message (23) from target server (17) is converted into a response (21) in a format which is compatible with the client machines (16);
- the response (21) is conveyed to input management module (18) of client machine (16) for transmission.

11. Method of communication according to claim 10, **characterised in that**
request data (20) recognised for its routing includes the nature of its contents.

12. Method of communication according to claim 10 or 11, **characterised in that**
the routing of request (20) and message (23) from target server (17) invokes at least one routing application module (24, 30) which can be connected to carry out predetermined routing functions.

13. Method of communication according to any of claims 10 to 12, **characterised in that**
to convert request (20) and message (23) from target server (17) at least one conversion application module (25, 31) that can be connected to execute predetermined conversion functions is used.

14. Method of communication according to any of claims 10 to 13, **characterised in that**
if only one output management module (19) was found during routing and receives throttling messages, the throttling messages are managed by:
. defining, at output management module (19), a maximum number of messages that the server (17) can process until a new definition;
. counting the number of messages received by output management module (19);
. subtracting the number of messages from the maximum number to obtain a number of messages allowed in order to determine a throttling level.

15. Method of communication, according to any of the claims 10 to 13, **characterised in that**
if all output management modules (19) found during routing receive throttling messages, the following operations are carried out for each one:
. definition, at the output management module (19), of a maximum number of messages that server (17) can process until a new definition;
. counting the number of client messages (22) received by output management module (19);
. subtracting the number of client messages (22) received from the maximum number to obtain a number of messages allowed, and to determine a throttling level;
and choice of the output management module (19) with the best throttling level.

16. Method of communication according to any of claims 10 to 13, **characterised in that**
if only one part of the output management modules (19) found during routing actually receive throttling messages and the other part is not subject to throttling:
1. For each output management module (19) receiving throttling messages, the following operations are performed:
. definition, at the output management module (19), of a maximum number of messages that can be processed by server (17) until a new definition;
. counting the number of client messages (22) received by output management module (19);
. subtracting the number of client messages (22) received from the maximum number to obtain a number of messages allowed in order to determine a throttling level;
. the number of acceptable messages is divided by the time remaining until the maximum number of acceptable messages is redefined in order to obtain a frequency for submittal requests
. the frequency of request submittal is added to the running time in order to determine the time from which output management module (19) will be able to accept a new client message (22).
2. client message (22) is directed towards the first output management module (19) receiving throttling messages able to accept it.
3. when no output management module (19) receiving throttling messages is able to accept it, client message (22) is directed towards another output management module (19).

17. Method of communication according to claim 16, **characterised in that**
the load between output management modules (19) not receiving throttling messages is distributed by the following operations:
1. construction of a table of output management modules (19) not receiving throttling messages
2. incrementing by one count on each client message (22) received
3. integer division of the counter number by the number of output management modules (19) not receiving throttling messages
4. use of the remainder from the division as index in the table to find the output management module (19) to be used which is not receiving throttling messages.
